# EUROPÄISCHE PATENTANMELDUNG

(11) **EP 0 705 999 A1**
(43) Veröffentlichungstag der Anmeldung: **10.04.1996**
(21) Anmeldenummer: 95114764.4
(22) Anmeldetag: 20.09.1995
(51) Int. Cl.: F16J 15/10, F16J 15/02

(54) **Dichtungsanordnung zum Abdichten von Bauwerksfugen**

(30) Priorität: 20.09.1994 DE 9415228 U
(71) Anmelder: Denso-Chemie Wedekind KG, D-51371 Leverkusen (DE)
(72) Erfinder: Klawa, Norbert, Dr.-Ing., D-40723 Hilden (DE); Feuser, Rolf, D-51371 Leverkusen (DE)
(74) Vertreter: Langmaack, Jürgen, Dipl.-Ing.

(57) **Zusammenfassung**

Die Erfindung betrifft eine Dichtungsanordnung zum Abdichten von Bauwerksfugen, mit einem Dichtungskörper (4) aus einem Elastomer und einem mit dem Dichtungskörper (4) in Wirkverbindung stehenden Gleitmittel in Form einer pastösen plastischen Masse.

## Beschreibung

Zum Abdichten von Bauwerksfugen mit Hilfe von Dichtkörpern, insbesondere dann, wenn die Dichtkörper als Preßdichtung in die Bauwerksfuge einzubringen sind, ist es erforderlich, den Dichtkörper und/oder die Wandungen der Bauwerksfuge mit einem Gleitmittel zu bestreichen, da sonst infolge der Rauhigkeit der Fugenwandungen ein einwandfreies Einbringen des Dichtkörpers nicht möglich ist. Derartige Gleitmittel sind auf Seifenbasis aufgebaut und haben daher den Nachteil, daß sie erst auf der Baustelle unmittelbar vor dem Einbringen des Dichtkörpers an der Bauwerksfuge aufgetragen werden können. Ferner sind diese Gleitmittel nicht alterungsbeständig sondern werden durch Feuchtigkeitseinfluß im Laufe der Zeit aufgelöst. Da das Gleitmittel sorgfältig und gleichmäßig aufgebracht werden muß, wird auf der Baustelle große Sorgfalt gefordert. Beim Zusammenfügen von mobilen Bauteilen, beispielsweise beim Aufeinandersetzen von Schachtringen, kann der erforderliche Dichtkörper auf den als Spitzende ausgebildeten, bereits verlegten Teil aufgezogen werden. Das Gleitmittel muß jedoch in das als Glocke der Muffenverbindung ausgebildete, als nächstes aufzusetzende Schachtringelement eingebracht werden. Da dies erst kurz vor dem Aufsetzen erfolgen kann, kann das Ausstreichen des als Glockenteil dienenden Endes erst dann erfolgen, wenn das aufzusetzende Schachtringteil bereits im Hebezeug hängt. Das Arbeiten unter schwebender Last ist ohne zusätzliche Sicherungsmaßnahmen nicht erlaubt, da dies schon zu schweren Unfällen geführt hat.

Da insbesondere bei der Verlegung von Betonrohren und Schachtringen aus Beton immer mehr dazu übergegangen wird, vorkonfektionierte vollständige Dichtungsanordnungen vorzusehen, die entweder bei der Rohrherstellung bereits in das Rohr eingeformt sind oder aber während der Verlegearbeiten kurz vor dem Zusammenfügen der einzelnen Rohrelemente aufgebracht werden, hat man auch das Problem des Aufbringens von Gleitmitteln zu lösen versucht. So wurde bereits vorgeschlagen (DE-A-29 00 437 und DE-A-38 17 860), an den als Preßdichtung dienenden Dichtungskörper einen lappenförmigen Ansatz anzuformen und auf die dem aufzuschiebenden Glockenteil zugekehrte Gleitfläche des Dichtungskörpers ein Gleitmittel aufzutragen und den lappenförmigen Ansatz als Abdeckung darüberzuschlagen. Auch hier wurden bisher die üblichen Gleitmittel auf Seifenbasis eingesetzt. Wird das glockenförmige Ende auf das mit dem Dichtungskörper versehene Spitzende aufgeschoben, dann legt sich der lappenförmige Teil an der Innenfläche des aufzuschiebenden Glockenteils fest an, so daß beim weiteren Aufschieben der lappenförmige Ansatz auf der mit Gleitmitteln beschichteten Gleitfläche des Dichtungskörpers abgleiten kann, bis das aufzuschiebende Rohrteil seine Endstellung erreicht hat. Der Gleitvorgang erfolgt somit nicht unmittelbar zwischen der rauhen Betonoberfläche und dem Dichtungskörper, sondern zwischen dem an der Betonoberfläche anliegenden Lappen einerseits und dem Dichtungskörper andererseits, so daß über das Gleitmittel lediglich die Gleitbedingungen zwischen diesen beiden Stoffen, in der Regel aus einem Elastomer, beispielsweise einem synthetischen Kautschuk, zu erfüllen sind. Eine derartige Dichtungsanordnung ist kompliziert und bedarf für Lager und Transport einer gesonderten Verpackung. Ein Einformen des Dichtungskörpers bei der Rohrherstellung ist hierbei nicht möglich.

Mit DE-A-41 07 993 wurde eine Lösungsmöglichkeit vorgeschlagen, auf den Dichtkörper unmittelbar vor dem Zusammenbau der Bauelemente einen mit Gleitmitteln gefüllten Schlauch aufzulegen.

Mit der DE-A-41 07 994 wird speziell für festeingebaute Rohrdichtungen ein Dichtungsring vorgeschlagen, der eine taschenartige Hohlkammer aufweist, in der eine aus der Hohlkammer herausziehbare Gleithilfe in Form einer Gleitfolie oder eines mit Gleitmitteln gefüllten Schlauchs eingesetzt ist, die beim Einschieben des Spitzendes aus dieser Hohlkammer herausgezogen wird. Die Herstellung einer derartigen Dichtungsanordnung ist aufwendig und nicht für alle Einsatzfälle anwendbar.

Aus DE-A-39 09 381 ist ferner eine Dichtungsanordnung zu entnehmen, bei der in die abzudichtende Bauwerksfuge, insbesondere den Muffenspalt von zwei zusammenzufügenden Betonrohren, auf das Spitzende ein Dichtkörper und in die zugehörige Glocke ein Gleitring eingesetzt werden, wobei die einander zugekehrten Gleitflächen von Dichtkörper und Gleitring mit einer festhaftenden dünnwandigen lack- oder folienartigen Beschichtung als Gleitmittel versehen sind. Das Gleitmittel ist auch hier wieder auf die Gleitbedingungen abgestellt, die für ein Gleiten der entsprechenden Fläche von Dichtkörper und Gleitring erforderlich sind, wobei auch hier Dichtkörper und Gleitring aus einem Gummi bzw. gummiähnlichen Werkstoff hergestellt sind.

Der Erfindung liegt nun die Aufgabe zugrunde, eine Dichtungsanordnung zum Abdichten von Bauwerksfugen zu schaffen, bei der die vorstehenden Nachteile vermieden werden.

Diese Aufgabe wird gelöst mit einer Dichtungsanordnung zum Abdichten von Bauwerksfugen, mit einem Dichtungskörper aus einem Elastomer und einem mit dem Dichtungskörper in Wirkverbindung stehenden Gleitmittel in Form einer pastösen plastischen Masse.

Der Begriff "Bauwerksfuge" im Sinne der vorliegenden Erfindung betrifft alle Anwendungsfälle, bei denen entweder nachträglich in vorhandene Fugen zwischen zwei Bauelementen, beispielsweise im Fertigteilbau zwischen zwei Betonplatten, eine Dichtung eingepreßt werden muß oder aber auch Anwendungsfälle, bei denen bereits ein Bauelement mit dem Dichtkörper versehen ist und ein weiteres Bauelement an das erste Bauelement angefügt wird, wie dies insbesondere beim Zusammenfügen von Betonrohren, Schachtringen oder dergl. der Fall ist.

Der Vorteil der erfindungsgemäßen Dichtungsanordnung besteht darin, daß, anders als die bisher als Gleitmittel verwendeten Seifen, eine pastöse plastische Masse als relativ dicke Schicht bereits werksseitig auf den Dichtungskörper aufgebracht werden kann. Je nach Anwendungsfall kann ein derartiger vorkonfektionierter, mit einer Gleitschicht versehener Dichtungskörper beispielsweise bei der Herstellung von Bauteilen im Werk eingeformt werden. Bei Betonrohren wird die Gleitschicht nach dem Einformen des Dichtungskörpers im Betonwerk aufgetragen. Die Gleitschicht wird zweckmäßig mit einer Schutzfolie abgedeckt. Das pastöse Gleitmittel kann aber auch auf der Baustelle auf wenigstens einer der relativ gegeneinander zu bewegenden Flächen nachträglich aufgetragen werden.

Ein weiterer Vorteil besteht darin, daß durch eine relativ dicke Beschichtung mit einer plastischen Masse eine rauhe Betonoberfläche zumindest über einen Teilbereich kittartig "zugespachtelt" werden kann, so daß zwischen der Dichtfläche des Dichtkörpers und der Betonoberfläche in der endgültigen Position zueinander noch über einen Teilbereich eine dünne Schicht dieser pastösen plastischen Masse vorhanden ist, so daß hier die Dichtwirkung des Dichtkörpers trotz der Rauhigkeit der Gegenfläche dauerhaft verbessert wird.

In einer bevorzugten Ausgestaltung der erfindungsgemäßen Dichtungsanordnung ist vorgesehen, daß das Gleitmittel durch ein Polyethylenwachs gebildet wird. Ein derartiges Gleitmittel hat den Vorteil, daß es auf Dichtungskörpern auf Natur- oder Synthesekautschukbasis sehr gut haftet und zum anderen auch nach längerer Lagerung seine Gleiteigenschaften nicht verliert. Das bedeutet in der Praxis, daß derartige Dichtungskörper auf Vorrat produziert und auch über längere Zeit gelagert und damit bevorratet werden können. Polyethylenwachse sind wasserunlöslich, so daß sie auch im Gleitberech eine gewisse Dichtfunktion auszuüben vermögen. Das als Gleitmittel einzusetzende Polyethylenwachs wird so eingestellt, daß es bei etwa 20°C eine pastöse Konsistenz aufweist. Zweckmäßig ist hierbei eine Einstellung mit einem Tropfpunkt nach Ubbelohde bei 80° bis 95°C und einer Viscosität bei 110°C mit 150 bis 220 mm²/s/cST (Ubbelohde-Kapillare III, DIN 51562). Zweckmäßig ist hierbei eine Zusammensetzung von 98 bis 92 Gewichts-% Polyethylenwachs mit einem Zusatz von 2 bis 8 Gewichts-% pyrogener Kieselsäure. Der Zusatz von Füllstoffen, wie beispielsweise pyrogener Kieselsäure, hat hierbei den Vorteil, daß die Gleitmittelschicht versteift wird und wärmestabil wird, so daß auch bei dickeren Beschichtungen eine gewisse Formstabilität und Wärmestabilität und damit die geforderte Lagerbeständigkeit gegeben ist.

Das Gleitmittel kann für vorgefertigte Dichtungskörper, insbesondere bei Dichtungskörpern, die aus Strangprofilen hergestellt werden, bereits bei der Herstellung aufgetragen werden. Beispielsweise bei extrudierten und vulkanisierten Dichtungskörpern auf Kautschukbasis bedarf es bei der Verwendung von Gleitmitteln aus Polyethylenwachsen keinerlei Vorbehandlung des Strangprofils. Das Gleitmittel kann vielmehr unmittelbar nach dem Durchlauf durch die Vulkanisation aufgrund seiner guten Haftung aufgetragen und mit einer Schutzfolie versehen werden. Bei ringförmigen Dichtungskörpern werden die Strangprofile zunächst konfektioniert und durch Auftragen des Gleitmittels weiterverarbeitet, mit einer Schutzfolie versehen und entsprechend verpackt.

Das erfindungsgemäße Dichtmittel kann jedoch aufgrund seiner pastösen Eigenschaften auch auf der Baustelle aus einem Gebinde von Hand oder mit entsprechenden Vorrichtungen auf wenigstens einer der Dichtflächen, beispielsweise auf das Spitzende eines Betonrohres aufgetragen werden, so daß beim Einschieben des Spitzendes in die mit einer einbetonierten Dichtung versehenen Muffe die gewünschte Gleitfähigkeit gegeben ist.

In Ausgestaltung der Erfindung kann das Gleitmittel auch eine kittartige plastische, vorzugsweise dauerplastische Konsistenz aufweisen, bei der auch spätere Relativbewegungen der Bauteile gegeneinander ohne Nachteil bleiben. Bevorzugt wird hierbei eine kittartige dauerplastische Masse, die im wesentlichen aus einer Mischung von Kautschuk, Weichmacheröl und Gleitstützer besteht.

Der Begriff "Kautschuk" im Sinne der vorliegenden Erfindung umfaßt sowohl natürliche als auch synthetische Kautschuke, beispielsweise Butylkautschuk, sowie Mischungen aus natürlichen und synthetischen Kautschuken.

Der Begriff "Weichmacheröl" im Sinne dieser Erfindung umfaßt alle Substanzen, die dem gewählten "Kautschuk" zugesetzt werden, um seine Weichheit, Biegsamkeit, Dehnbarkeit und Bearbeitbarkeit zu verbessern.

Der Begriff "Gleitstützer" umfaßt solche Zuschlagstoffe, die in die Masse eingemischt sind und die die Duktilität der Masse bei einer Scherbeanspruchung einer entsprechenden Masseschicht, wie sie beispielsweise beim Einpressen eines mit der Masse beschichteten Dichtungskörpers in eine Bauwerksfuge bzw. beim Aufsetzen eines Schachtringes erfolgen, bei dem das entsprechende Spitzende mit dem Dichtkörper versehen ist und die Gleitfläche mit der dauerplastischen Masse beschichtet ist. Bei den Gleitstützern handelt es sich in erste Linie um Mineralpulver, wie Kaolin, Steinmehl, Schiefermehl oder auch Mischungen hiervon. Bevorzugt wird jedoch Talkumpulver verwendet, das aufgrund seiner blättrigkristallinen schuppigen Struktur als Gleitstützer im Sinne der Erfindung besonders günstige Eigenschaften aufweist.

In einer bevorzugten Ausgestaltung der Erfindung ist vorgesehen, daß der Kautschuk in der Mischung mit einem thermoplastischen Kunststoff verschnitten ist. Als Kunststoff kommen hier alle Kunststoffarten in Betracht, die einerseits in ihrer chemischen Zusammensetzung mit dem betreffenden Kautschuk verträglich sind und die zum anderen bei den für die Erstellung der Kautschukmischung erforderlichen Temperturen plastifizierbar sind. Bei den hier in Betracht kommenden Kautschuken und Kautschukmischungen lassen sich von der Temperaturführung her thermoplastische Kunststoffe verwenden, die bis etwa 200°C plastifizierbar sind. Besonders vorteilhaft ist bei der Verwendung von Butylkautschuk die Verwendung von Polyethylenen. Die Kunststoffe lassen sich einmischen, wobei im Endzustand ein Polymerverschnitt entsteht.

In weiterer vorteilhafter Ausgestaltung der Erfindung ist vorgesehen, daß die Mischung ein Trennmittel enthält. Diese Anordnung hat den Vorteil, daß beim Einbau die jeweils freiliegende Oberfläche der kittartigen Masse nicht an den Händen bzw. am Auftragswerkzeug anhaftet, so daß auf die Anordnung einer zusätzlichen Trennfolie verzichtet werden kann. Durch die Einbringung des Trennmittels in die Mischung ergibt sich der Vorteil, daß das Trennmittel auch bei längerer Lagerung immer wieder an die freiliegende Oberfläche gelangt, so daß der gewünschte Trenneffekt aufrechterhalten bleibt. Verwendet man entsprechend einer Ausgestaltung der Erfindung Glykole als Trennmittel, so ergibt sich als weiterer Vorteil, daß die kittartige dauerplastische Masse eine gewisse Frostbeständigkeit besitzt, so daß die Masse die im Bau, insbesondere bei der Verlegung von Betonrohren üblichen Anforderungen an die Verarbeitbarkeit hinsichtlich der Temperatur zwischen -10°C und +70°C erfüllt. Durch die Zumischung von Glykolen ist auch bei -10°C die notwendige Gleitwirkung gegeben. In bevorzugter Weise wird hierbei als Trennmittel Glycerin eingesetzt, da Glycerin beispielsweise gegenüber Diethylenglykol einen höheren Verdampfungspunkt besitzt und damit bereits im Herstellungsstadium nicht aus der Masse ausdampfen kann. Glykol, insbesondere Glycerin, besitzt ferner die Eigenschaft, daß es aus der Masse an die Oberfläche ausschwitzt und hierbei aus der umgebenden Luft Wasser aufnimmt, so daß ständig ein Feuchtigkeitsfilm auf der freiliegenden Oberfläche der Masse vorhanden ist. Damit ist ein Anhaften an einer Verpackung und auch ein Anhaften an den Händen und/oder Werkzeugen bei der Verarbeitung vermieden. Anhaltender Staub oder Sand kann ohne weiteres abgewischt werden, ohne die Funktion zu beeinträchtigen.

In bevorzugter Ausgestaltung der Erfindung besteht die kittartige Masse aus einer Mischung (in Gewichts-%) von
2 - 30% Kautschuk
0 - 20% thermoplastischen Kunststoff
5 - 40% Weichmacheröl
5 - 60% Gleitstützer
0 - 10% Verarbeitungshilfsstoffe
0 - 30% Trennmittel, vorzugsweise Glykole.

Durch entsprechende Mischungszusammenstellungen läßt sich die Konsistenz der Masse, insbesondere ihre mechanische Verarbeitbarkeit beeinflussen. Dies gilt beispielsweise für den Gehalt an Weichmacherölen. Die vorstehend genannten Verarbeitungshilfsstoffe sind lediglich für die Erstellung der Mischung von Bedeutung. So muß beispielsweise bei der Verwendung von Butylkautschuk in entsprechender Menge Zinkoxid und Stearinsäure beigemischt werden, um zu Beginn der Mischarbeit die Butylkautschukmasse überhaupt durchkneten zu können. Hierzu zählen auch Farbpigmente, die beispielsweise zur Kennzeichnung von unterschiedlichen Massetypen eingemischt werden.

Eine gemäß der Erfindung besonders bevorzugte Mischung (in Gewichts-%) wird gebildet von
5 - 10% vorzugsweise 7% Kautschuk
0 - 5% vorzugsweise 0,3% thermoplastischer Kunststoff
15 - 30% vorzugsweise 23% Weichmacheröl
45 - 55% vorzugsweise 50% Gleitstützer
2 - 5% vorzugsweise 2,7% Verarbeitungshilfsstoffe
10 - 25% vorzugsweise 17% Glykol.

Insbesondere bei der als bevorzugt angegebenen Mischungszusammensetzung ergibt sich eine formstabile Masse, die nicht gesondert gefaßt oder abgedeckt werden muß. Sie kann in einer Schichtdicke zur Bildung einer Gleitschicht von 0,5 - 5 mm und mehr auf wenigstens eine Dichtfläche des Dichtkörpers aufgebracht werden. Damit ist es möglich, einen fabrikmäßig vorkonfektionierten Dichtkörper in Strang- oder Ringform anzubieten, bei dem die als Gleitschicht aufgebrachte kittartige Masse ohne jegliche Abdeckmittel freiliegt, so daß ein sofortiger Einbau möglich ist. Bei der Herstellung von strangartigen Dichtungen oder aus einem derartigen Strangmaterial hergestellten Dichtringen kann die kittartige Masse auf die Dichtfläche des betreffenden Dichtkörpers mechanisch aufgepreßt bzw. aufkalandriert werden.

In einer besonders vorteilhaften Ausgestaltung der Erfindung ist jedoch vorgesehen, daß bei einem Dichtkörper aus einem vulkanisierbaren Kautschuk die Masseschicht an die Dichtfläche anvulkanisiert ist. Dies kann beispielsweise in der Weise erfolgen, daß der vulkanisierbare Kautschuk und die Masse zu einem Strang koextrudiert werden, der anschliessend das Vulkanisationsverfahren durchläuft. Da die kittartige Masse gemäß der Erfindung in ihrem Kautschukanteil keine Vulkanisationsbeschleuniger enthält, ändert sich durch den Vulkanisationsvergang nicht ihre kittartige dauerplastische Konsistenz. Andererseits ist jedoch der Kautschukanteil in der Masse für Vulkanisationsbeschleuniger aufnahmefähig, so daß bei der Koextrusion und beim anschließenden Vulkanisationsvorgang in geringem Maße im Bereich der Berührungsfläche zwischen Masseschicht und Dichtkörper Vulkanisationsbeschleuniger in die Masse eindiffundieren und hierbei für eine feste vulkanisierte Verbindung zwischen Masseschicht und Dichtkörper sorgen. Damit ergibt sich eine hohe Haftung zwischen Masse und Dichtkörper, so daß beim Einfügen der Dichtung in eine Bauwerksfuge infolge der Relativbewegung zwischen den beiden abzudichtenden Bauteilen die Masse trotz ihrer festen Haftung an der rauhen Betonoberfläche und der gleichzeitig erfolgenden Verpressung des Dichtkörpers nicht von der Oberfläche des Dichtkörpers abgeschält wird.

Der Vorteil der Glycerinbeimischung als Trennmittel liegt hierbei darin, daß der Verdampfungspunkt des Glycerins so hoch liegt, daß das Glycerin im Vulkanisationsprozeß nicht verdampft.

Anstelle der Heißvulkanisation ist aber auch eine Kaltvulkanisation oder auch ein Ankleben möglich. In diesem Falle müssen die miteinander zu verbindenden Flächen, zumindest die Flächen des Dichtkörpers, vorbehandelt werden.

Die Erfindung wird anhand schematischer Ausführungsbeispiele näher erläutert. Es zeigen:
- Fig. 1: eine Dichtungsanordnung zur Abdichtung eines sogenannten Schachtringes aus Beton,
- Fig. 2: eine Dichtungsanordnung für eine Steckmuffenverbindung von Betonrohren,
- Fig. 3: die Abdichtung einer Bauwerksfuge.

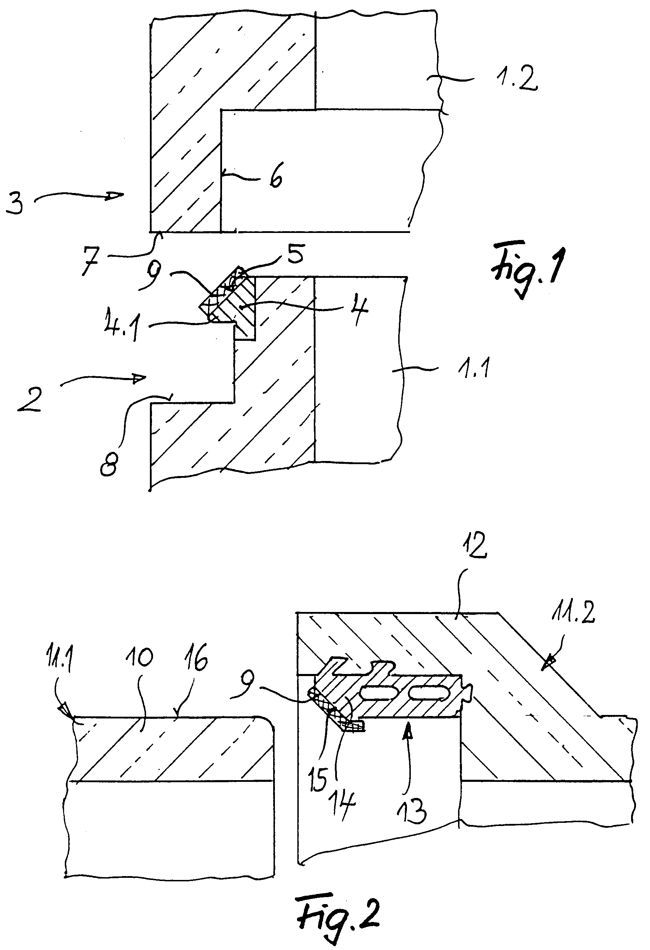

Sogenannte Schachtringe, die in Fig. 1 nur in einem Teilschnitt für den Verbindungsbereich dargestellt sind, werden zur Herstellung von Schächten, Becken oder dergl. aus entsprechend geformten Betonteilen durch Übereinanderstapeln in der gewünschten Höhe bzw. in der gewünschten Tiefe aufeinandergesetzt. Jeder Schachtring 1 weist jeweils ein als Spitzende 2 und als Glocken- bzw. Muffenende 3 ausgebildete Endseite auf. Derartige Schachtringe werden in der Regel in der Weise montiert, daß jeweils das Spitzende 2 des unteren Schachtringes 1.1 nach oben weist, so daß anschließend der nächstfolgende Schachtring 1.2 mit seinem Glockenende mit einem Hebezeug aufgesetzt werden kann, wobei jeweils das nach oben weisende Spitzende 2 in das nach unten weisende Glockenende 3 des aufzusetzenden Schachtringes 1.2 eingeführt wird. Die hierbei zwischen Spitzende 2 und Glockenende 3 notwendige Fuge wird über einen Dichtkörper 4 aus einem Elastomer abgedichtet, der jeweils auf das Spitzende 2 eines Schachtringes aufgezogen ist. Der Dichtkörper 4 hat bei dem dargestellten Ausführungsbeispiel eine konisch zulaufende Form, die gegen die Muffe des anderen Schachtringes eine Gleit- und Dichtfläche 5 bildet. Der Dichtkörper 4 ist in bezug auf seinen Außendurchmesser so bemessen, daß er größer ist als der lichte Innendurchmesser des Glockenteiles 3 des aufzusetzenden Schachtringes, so daß beim Aufsetzen dieses Schachtringes der überragende Teil 4.1 des Dichtkörpers 4 unter gleichzeitiger Verpressung verformt wird, so daß die entsprechende Innenfläche 6 des Glockenteiles 3 über die Gleit- und Dichtfläche 5 geschoben wird, die in der Endposition, wenn die Stirnfläche 7 am Glockenteil 3 sich auf der Stützschulter 8 des Spitzendes 2 abstützt, unter entsprechender Verpressung auf der Gegenfläche 6 anliegt.

Um hier eine Beschädigung der Dichtfläche 5 oder gar ein "Herauswürgen" des Dichtkörpers 4 aus seinem Sitz auf dem Spitzende zu vermeiden, wurde bisher auf die Innenfläche 6 der Glocke ein Gleitmittel in Form einer Seife aufgetragen, wobei gleichzeitig auch die Gleit- und Dichtfläche 5 am Dichtkörper mit einem entsprechenden Gleitmittelauftrag versehen wurde. Diese Arbeiten mußten vor dem Aufsetzen des nächstfolgenden Schachtringes, also unter schwebender Last vorgenommen werden.

Bei dem in Fig. 1 dargestellten Ausführungsbeispiel ist nun auf die Gleit- und Dichtfläche 5 ein Streifen aus einem Gleitmittel 9 aufgebracht. Der Gleitmittelstreifen 9 kann nun je nach Herstellungsart noch auf der Baustelle durch Andrücken auf der Gleit- und Dichtfläche 5 befestigt werden. Zweckmäßig ist es jedoch, wenn der ringförmige Dichtkörper 4 bereits bei der Herstellung fest mit einem entsprechenden Streifen 9 aus diesem Gleitmittel verbunden ist, sei es mechanisch durch Aufkalandrieren oder aber wenn der Dichtkörper 4 und auch das Gleitmittel aus einem vulkanisierbaren Material hergestellt ist, bereits durch Aufvulkanisieren nach Koextrusion von Dichtkörper 4 und Streifen 9.

Wird nun der Schachtring 1.2 nach dem Anbringen eines so vorkonfektionierten Dichtringes aufgesetzt, dann kann er infolge der Relatlvbewegung die Oberfläche 6 zumindest zu Anfang ohne unmittelbare Berührung mit der Gleit- und Dichtfläche 5 unter gleichzeitiger Verformung des Dichtkörpers 4 über den Dichtkörper geschoben werden, wobei der Streifen 9 aufgrund seiner Gleiteigenschaften gleichzeitig als Gleitmittel dient. Sobald der Schachtring 1.2 seine endgültige Lage erreicht hat, liegt praktisch nur die Dichtkante 4.1 des Dichtkörpers 4 unmittelbar auf der rauhen Betonoberfläche an, während zwischen der rauhen Betonoberfläche 6 und dem an die Dichtkante 4.1 entsprechend der Verformung angrenzenden Flächenbereich der Gleit- und Dichtfläche 5 eine wenn auch dünne Zwischenschicht des Gleitmittels verbleibt. Damit ist zusätzlich zu der durch die Verpressung des Dichtkörpers 4 erfolgenden Abdichtung noch eine gewisse Abdichtung der feinsten Poren durch die Gleitmittelmasse gewährleistet.

Bei entsprechender Mischungszusammensetzung besitzt die Gleitmittelmasse eine entsprechende Konsistenz, so daß der auf den Dichtkörper 4 aufgebrachte Streifen 9 aus dieser Masse aus sich selbst heraus formstabil ist und nicht über entsprechende Formgebungen des Dichtkörpers gefaßt oder auch abgedeckt werden muß.

Fig. 2 zeigt das Spitzende 10 eines Betonrohres 11.1, sowie die Glocke 12 eines Betonrohres 11.2. In der Glocke 12 ist ein Dichtungsring 13 angeordnet, der bereits bei der Herstellung des Betonrohres 11.2 in die Glocke 12 eingeformt und mit dieser fest verbunden ist. Der Dichtungsring 13 weist im Bereich des Einschubendes der Glocke 12 einen Dichtungskörper 14 auf, der mit einer konischen Gleitfläche 15 versehen ist, so daß beim Einschieben des Spitzendes 10 des Rohres 11.1 die Gleitfläche 15 auf der Außenfläche 16 des Spitzendes 10 unter gleichzeitiger Verformung des Dichtkörpers 14 gleiten kann. Die Gleit- und Dichtfläche 15 ist bei diesem Ausführungsbeispiel wieder mit einem Streifen 9 aus der Gleitmittelmasse versehen, so daß auch hier beim Einschieben des Spitzendes die Gleitmittelmasse einen Teilbereich der Oberfläche 16 abdeckt, so daß zwischen der Gleit- und Dichtfläche 15 und der rauhen Oberfläche 16 des Spitzendes 10 im Endzustand eine dünne Gleitmittelschicht verbleibt.

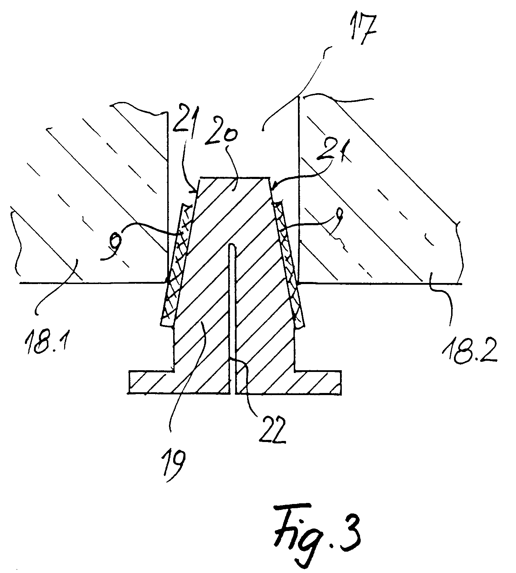

In Fig. 3 ist eine Bauwerksfuge 17 zwischen zwei Bauteilen 18.1 und 18.2, beispielsweise Fertigbetonplatten, dargestellt. Die Bauwerksfuge 17 kann beispielsweise auch durch eine sogenannte Scheinfuge gebildet werden, die bei einer durchgehenden Fertigung einer Betonplatte vorgesehen wird, um später bei Setzbewegungen des Bauwerks bzw. der Abdeckplatte gezielt in diesem Bereich eine Rißbildung zuzulassen.

Bei dem hier dargestellten Ausführungsbeispiel ist ein im Querschnitt keilförmig ausgebildetes Einschubende 20 vorgesehen. Die beiden Seitenflächen 21 sind wiederum mit einem Streifen 9 aus Gleitmittel belegt. Wird als Gleitmittel eine kittartige dauerplastische Masse verwendet, dient beim Einpressen des Dichtkörpers 19 in die Bauwerksfuge die Masse 9 zunächst als Gleitmittel und dann als Dichtungskitt für den verpreßten Bereich des Dichtkörpers 19.

Der Dichtkörper 19 kann hierbei auf der Außenseite mit einem längslaufenden Schlitz 22 versehen sein, so daß mit Hilfe eines schneidenförmigen Werkzeuges trotz einer hohen Verpressung des Dichtkörpers 19 von beispielsweise 20% und mehr der Dichtkörper durch den im Bereich des Schlitzgrundes liegenden Angriffspunktes des Werkzeuges in die Fuge 17 "hineingezogen" werden kann.

Die vorstehenden Ausführungsbeispiele stellen bevorzugte Konfektionierungen der Dichtungsanordnung dar, d. h. die jeweiligen Dichtkörper 4, 13 und 19 sind jeweils bereits werksseitig mit einem entsprechenden Streifen 9 mit Gleitmittel versehen. Hierbei ist die Konsistenz so eingestellt, daß sie zwar dauerplastisch ist, auch die erforderliche Nachgiebigkeit in Scherrichtung bei der Relativbewegung von Betonoberfläche und Dichtungskörper besitzt, gleichwohl jedoch formstabil ist, so daß sie als konfektionierter Streifen sowohl auf der Baustelle als auch bei der fabrikmäßigen Verbindung mit dem Dichtkörper handhabbar ist.

Die Vorteile der Erfindung können jedoch auch dann nutzbar gemacht werden, wenn die Einstellung der Konsistenz des Gleitmittels so vorgenommen wird, daß es spachtelfähig ist, so daß, wie bisher, auf der Baustelle oder beim Herstellen von Betonrohren das Gleitmittel in einer entsprechenden Schicht auf der Gegenfläche zum Dichtungskörper aufgetragen werden kann.

Die angegebene Formstabilität ergibt sich bei kittartigen Massen auf Kautschukbasis insbesondere dann, wenn in entsprechender Menge thermoplastische Kunststoffe beim Herstellen der Mischung in den Kautschuk eingearbeitet werden. Der Anteil an Weichmacherölen und Trennmitteln muß hierbei ebenfalls entsprechend bemessen werden. Will man eine spachtelfähige Konsistenz erreichen, kann der Anteil an thermoplastischen Kunststoffen ganz entfallen und der Anteil an Weichmacherölen entsprechend erhöht werden.

## Patentansprüche

1. Dichtungsanordnung zum Abdichten von Bauwerksfugen, mit einem Dichtungskörper (4; 14; 19) aus einem Elastomer und einem mit dem Dichtungskörper (4; 14; 19) in Wirkverbindung stehenden Gleitmittel in Form einer pastösen plastischen Masse.

2. Dichtungsanordnung nach Anspruch 1, dadurch gekennzeichnet, daß die plastische Masse (9) in einer Schichtdicke zwischen 0,5 und 5 mm, vorzugsweise 2 bis 3 mm auf wenigstens eine Dichtfläche (5; 15; 21) des Dichtkörpers (4; 14; 19) aufgebracht wird.

3. Dichtungsanordnung nach Anspruch 1, dadurch gekennzeichnet, daß das Gleitmittel durch ein Polyethylenwachs gebildet wird.

4. Dichtungsanordnung nach Anspruch 1 oder 2, dadurch gekennzeichnet, daß das Polyethylenwachs mit Füllstoffen versetzt ist, insbesondere 2 bis 8 Gewichts-% pyrogener Kieselsäure.

5. Dichtungsanordnung nach Anspruch 1 oder 2, dadurch gekennzeichnet, daß das Gleitmittel durch eine plastische Masse gebildet wird, die vorzugsweise aus einer Mischung von Kautschuk, Weichmacheröl und Gleitstützern besteht.

6. Dichtungsanordnung nach Anspruch 5, dadurch gekennzeichnet, daß der Kautschuk in der Mischung mit einem thermoplastischen Kunststoff verschnitten ist.

7. Dichtungsanordnung nach Anspruch 5 bis 6, dadurch gekennzeichnet, daß der Gleitstützer durch ein Mineralpulver, insbesondere Talkumpulver, gebildet wird.

8. Dichtungsanordnung nach einem der Ansprüche 5 bis 7, dadurch gekennzeichnet, daß die Mischung ein Trennmittel enthält.

9. Dichtungsanordnung nach einem der Ansprüche 5 bis 8, dadurch gekennzeichnet, daß als Trennmittel Glykole verwendet werden.

10. Dichtungsanordnung nach einem der Ansprüche 5 bis 9, dadurch gekennzeichnet, daß als Trennmittel Glycerin verwendet wird.

11. Dichtungsanordnung nach einem der Ansprüche 5 bis 10, dadurch gekennzeichnet, daß die kittartige Masse aus einer Mischung (in Gewichts-%) von
2 bis 30% Kautschuk
0 bis 20% thermoplastischen Kunststoffen
5 bis 40% Weichmacheröl
5 bis 60% Gleitstützer
0 bis 10% Verarbeitungshilfsstoffe
0 bis 30% Trennmittel, vorzugsweise Glykole
besteht.

12. Dichtungsanordnung nach einem der Ansprüche 5 bis 11, dadurch gekennzeichnet, daß die kittartige Masse aus einer Mischung (in Gewichts-%) von
5 bis 10% vorzugsweise 7% Kautschuk
0 bis 5% vorzugsweise 0,3% thermoplastischen Kunststoff
15 bis 30% vorzugsweise 23% Weichmacheröl
45 bis 55% vorzugsweise 50% Gleitstützer
2 bis 4% vorzugsweise 2,7% Verarbeitungshilfsstoffe
10 bis 25% vorzugsweise 17% Glykol
besteht.

13. Dichtungsanordnung nach einem der Ansprüche 1 bis 12, dadurch gekennzeichnet, daß bei einem Dichtungskörper (4; 14; 19) aus einem vulkanisierbaren Kautschuk die Masseschicht (9) an die Dichtfläche (5; 15; 21) anvulkanisiert ist.
